**Europäisches Patentamt**

**European Patent Office**

**Office européen des brevets**

(11) Veröffentlichungsnummer: **0 143 189**
A2

(12) **EUROPÄISCHE PATENTANMELDUNG**

(21) Anmeldenummer: **84109964.1**

(22) Anmeldetag: **22.08.84**

(51) Int. Cl.⁴: **H 01 R 35/02**

(30) Priorität: **01.09.83 DE 3331528**

(43) Veröffentlichungstag der Anmeldung: **05.06.85**
Patentblatt 85/23

(84) Benannte Vertragsstaaten: **AT BE CH FR GB IT LI LU NL SE**

(71) Anmelder: **Hans Flohe GmbH & Co., Rheinstrasse 19, D-4620 Castrop-Rauxel (DE)**

(72) Erfinder: **Haremsa, Johannes, Sandforthsweg 23, D-4690 Herne 2 (DE)**
Erfinder: **Dung, Herbert, Tiefenweg 4, D-4600 Dortmund 30 (DE)**

(74) Vertreter: **Henfling, Fritz, Dipl.-Ing., Beurhausstrasse 7, D-4600 Dortmund 1 (DE)**

(54) **Bandförmiger Dehnverbinder.**

(57) Um ein zu Beschädigungen führendes Aufschwingen der Bestandteil eines Dehnungsbandes (11) bildenden Metallfolien (111) im Dehnbereich (14) zu unterbinden, werden die Metallfolien (111) im Dehnbereich (14) zusätzlich durch eine das Folienpaket umfassende Klammer (21) zusammengehalten.

- 1 -

## Dehnungsband (Dehnverbinder)

Die Erfindung betrifft ein Dehnungsband der im Oberbegriff des Patentanspruches 1 umrissenen Ausgestaltung.

Solche Dehnungsbänder werden unter anderem zur elektrischen Verbindung von Stromschienen und zum Anschluß von Transformatoren, Lichtbogenöfen und dergleichen an Stromschienen eingesetzt und sollen Wärmeausdehnungen im Verbindungs- bzw. Anschlußbereich ausgleichen. In der Praxis hat sich ergeben, daß es unter bestimmten Bedingungen zu Brüchen der Metallfolien im nichtverschweißten Bereich der Dehnungsbänder kommt. Ursache dafür sind sich aufschaukelnde Schwingungen im Dehnbereich der Dehnungsbänder, herrührend von bestimmten Frequenzen des eingespeisten Stroms, wobei es dann auch noch zu einer Verstärkung der Schwingungen durch am Dehnungsband entlang verlaufende Luftströmungen kommen kann, denen solche Dehnverbinder etwa bei Elektroöfen ausgesetzt sind.

Der Erfindung liegt die Aufgabe zugrunde, solche Brüche von Bestandteil von Dehnungsbändern bildenden Metallfolien zu unterbinden.

- 2 -

Die Aufgabe wird erfindungsgemäß bei einem Dehnungsband der eingangs umrissenen Ausgestaltung durch die konstruktive Maßnahme entsprechend dem kennzeichnenden Teil des Patentanspruches 1 gelöst.

Die zusätzliche Verklammerung der Metallfolien im Bereich zwischen den zu massiven Blöcken verschweißten Anschlüssen unterbindet das Auftreten von zu Brüchen der Metallfolie führenden Schwingungen im Dehnbereich der Dehnverbinder, ohne das erwünschte Arbeitsvermögen einzuschränken.

Die Verklammerung läßt sich durch eine das Metallfolienpaket umfassende Klammer herbeiführen. Da solche Dehnungsbänder mit sehr geringem Abstand voneinander nebeneinander angeordnet werden, wird dabei tunlichst dafür Sorge getragen, daß die Klammer seitlich nicht über den Dehnverbinder vorspringt. Dazu ist die Klammer in Ausgestaltung der Verklammerung in seitliche Ausnehmungen der Metallfolien eingebettet. In weiterer Ausgestaltung ist der Rücken der Klammer mit der Metallfolie, gegen die er zur Anlage kommt, verschweißt.

Nach einer abgewandelten Ausführungsform wird die Verklammerung durch einen in eine sich durch das Folienpaket erstreckende Bohrung eingezogenen Niet bewirkt, der zweckmäßigerweise in eine elastische Manschette aus einem hinreichend wärmebeständigen Material eingebettet ist.

In der Zeichnung ist die Erfindung anhand eines Ausführungsbeispieles weitergehend erläutert. Es zeigen:

Figur 1   den neuen Dehnverbinder in Seitenansicht,

Figur 2   einen Schnitt nach Linie II-II in
          Figur 1.

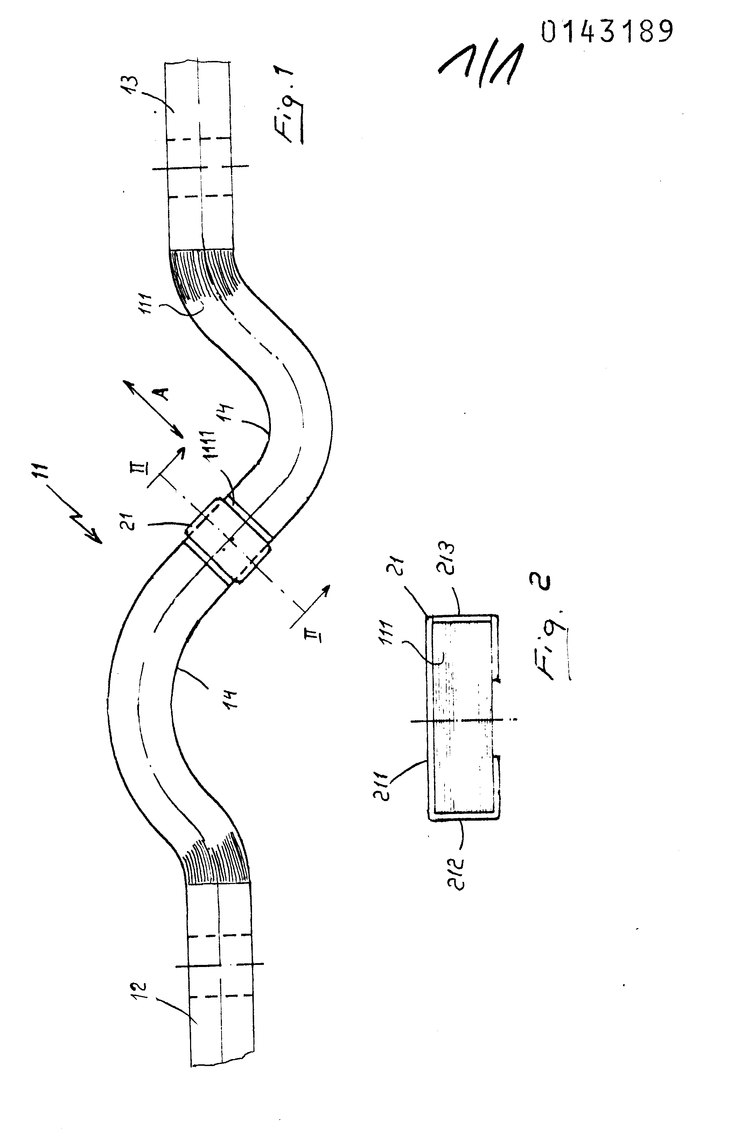

Das Dehnungsband 11 besteht aus einer Vielzahl von zu
einem Paket zusammengefaßten Metallfolien 111 (insbesondere Figur 2), die in den Endbereichen des Dehnungsbandes zu kompakten Anschlußblöcken 12 und 13 verschweißt
sind. Im eigentlichen Dehnbereich 14, also dem Bereich
zwischen den Anschlußblöcken 12 und 13, in dem die Bestandteil des Dehnverbinders bildenden Metallfolien 111
nicht miteinander verschweißt sind, wird das Folienpaket (111) durch eine das Folienpaket (111) einfassende Klammer 21 zusammengehalten, die Schwingungsbewegungen der Metallfolien 111 im Sinne des Doppelpfeiles A
in Figur 1 unterbindet.

Die Klammer 21 fügt sich mit ihren Schenkeln 212 und 213
in seitliche Ausnehmungen 1111 im Folienpaket (111) ein,
sodaß auch mit der Klammer 21 versehene Dehnungsbänder
dicht an dicht eingesetzt werden können. Sicherheitshalber ist der Rücken 211 der Klammer 21 mit der Metallfolie 111, gegen die er zur Anlage kommt, verschweißt.

Patentansprüche:

1. Dehnungsband (Dehnverbinder), bestehend aus einer Vielzahl von zu einer Packung zusammengefaßten Metallfolien, die in den Anschlußbereichen, also an den Enden, zu homogenen Blöcken verschweißt sind, zwischen denen sich der eigentliche von den Folien gebildete Dehnbereich erstreckt, dadurch gekennzeichnet, daß die Metallfolien (111) im Dehnbereich (14) im Abstand von den Anschlußblöcken (12,13) an mindestens einer weiteren Stelle durch eine Verklammerung (z.B.21) zusammengefaßt sind.

2. Dehnungsband nach Anspruch 1, gekennzeichnet durch eine Verklammerung der Metallfolien (111) mittels einer die Gesamtheit der Folien (111) einfassenden Klammer (21).

3. Dehnungsband nach Anspruch 2, dadurch gekennzeichnet, daß die Metallfolien (111) im Verklammerungsbereich mit seitlichen Ausnehmungen (1111) versehen sind, in die sich die von der Seite her gegen die Folien zur Anlage kommenden Schenkel (212,213) der Klammer (21) einfügen.

4. Dehnungsband nach einem der Ansprüche 2 und 3, dadurch gekennzeichnet, daß der Rücken (211) der Klammer (21) mit der Metallfolie (111), gegen die er zur Anlage kommt, fest verbunden ist.

5. Dehnungsband nach Anspruch 1, gekennzeichnet durch eine Verklammerung der Metallfolien mit Hilfe eines in eine sich durch die Folien erstreckende Bohrung eingezogenen Nietes.

6. Dehnungsband nach Anspruch 5, gekennzeichnet durch
   einen in eine Manschette aus Gummi oder dergleichen
   eingebetteten Niet.

Fig. 1

Fig. 2